# FASCICULE DE BREVET EUROPEEN

(11) **EP 3 285 576 B1**
(45) Date de publication et mention de la délivrance du brevet: **24.06.2020**
(21) Numéro de dépôt: 16723430.1
(22) Date de dépôt: 22.04.2016
(51) Int. Cl.: A01N 1/02

(54) **PROCEDE DE CONSERVATION DE CELLULES, TISSUS OU ORGANES EN HYPOTHERMIE**
HYPOTHERMISCHES ZELL-, GEWEBE- ODER ORGANKONSERVIERUNGSVERFAHREN
HYPOTHERMIC CELL, TISSUE OR ORGAN PRESERVATION PROCESS

(30) Priorité: 23.04.2015 FR 1553659
(43) Date de publication de la demande: 28.02.2018
(73) Titulaire: Etablissement Français du Sang, 93218 La Plaine Saint Denis Cedex (FR); Université de Bordeaux, 33000 Bordeaux (FR); Centre National de la Recherche Scientifique (CNRS), 75016 Paris (FR)
(72) Inventeur: IVANOVIC, Zoran, 33700 Merignac (FR); GERBY, Sandie, 33370 Artigues près Bordeaux (FR); VLASKI-LAFARGE, Marija, 33400 Talence (FR)
(74) Mandataire: Cabinet Becker et Associés
(86) Numéro de dépôt international: PCT/FR2016/050948
(87) Numéro de publication internationale: WO 2016/170281

(56) Documents cités:
- WO-A1-2010/050073
- US-A1- 2008 089 947
- US-A1- 2012 244 067

## Description

La présente invention se rapporte à un nouveau procédé de conservation à moyen et long termes de cellules, tissus ou organes. Ce procédé est plus particulièrement destiné à la conservation des greffons jusqu'à leur transplantation chez le receveur.

### ARRIERE-PLAN TECHNOLOGIQUE DE L'INVENTION

A ce jour, la cryopréservation est la seule méthode disponible pour la conservation des greffons de cellules hématopoïétiques à moyen et long termes. En effet, sans congélation et à une température de 4°C, il a été observé que le nombre et la capacité fonctionnelle des cellules progénitrices contenues dans les greffons diminuaient drastiquement après seulement 3 jours de conservation (Hechler et al., 1996).

La cryopréservation présente cependant des inconvénients notables, notamment la possibilité d'agglutination durant la décongélation ou le risque de réaction anaphylactique déclenchée par la présence de cryoprotecteurs. De plus, cette méthode n'est pas applicable à tous les types cellulaires.

De précédentes études ont démontré que la conservation à court-terme à 4°C des cellules souches hématopoïétiques CD34+ était améliorée en modifiant les conditions atmosphériques des cultures, notamment en diminuant la concentration en oxygène et augmentant la concentration en dioxyde de carbone (Vlaski et al., 2014). Bien que notables, ces améliorations demeurent insuffisantes pour assurer la survie et le maintien des capacités fonctionnelles des cellules, et en particulier des cellules progénitrices, pour une conservation à long terme à 4°C. L'utilisation d'inhibiteurs de l'influx calcique a également été envisagée pour préserver les tissus et organes avant transplantation (demande de brevet US 2008/089947).

Un procédé optimal permettrait de conserver à long terme les greffons en conditions d'hypothermie, sans congélation, et simplifierait ainsi la logistique et les processus de greffe tout en améliorant les résultats obtenus chez le receveur.

### RESUME DE L'INVENTION

Les inventeurs ont démontré que la pré-incubation de cellules en hypothermie modérée et sous une atmosphère hypoxique et/ou hypercapnique avant d'être conservées en hypothermie sévère permettait d'améliorer considérablement la survie et la capacité de prolifération desdites cellules, notamment dans le cas de cellules souches.

Ainsi, selon un premier aspect, la présente invention concerne un procédé *in vitro* ou *ex vivo* de conservation de cellules animales, de préférence de cellules humaines, en hypothermie sévère comprenant une étape consistant à maintenir lesdites cellules en hypothermie modérée et sous une atmosphère hypoxique et/ou hypercapnique durant environ 12 à environ 72 heures, avant de les conserver en hypothermie sévère.

Les cellules peuvent être conservées en hypothermie sévère à une température comprise entre environ 1°C et environ 12°C, de préférence environ 4°C.

Les cellules sont maintenues en hypothermie modérée à une température comprise entre 20°C et 35°C, de préférence environ 30°C.

Les cellules peuvent être maintenues en hypothermie modérée et sous une atmosphère hypoxique et/ou hypercapnique durant environ 24 à environ 48 heures, de préférence durant environ 48 heures.

L'atmosphère hypoxique comprend 0,5 à 10 % de dioxygène, de préférence environ 5 % de dioxygène.

L'atmosphère hypercapnique comprend 5 à 20 % de dioxyde de carbone, de préférence environ 9 % de dioxyde de carbone.

De préférence, les cellules sont maintenues en hypothermie modérée et sous une atmosphère hypoxique et hypercapnique.

Les cellules conservées selon le procédé de l'invention peuvent être des cellules de peau, de cartilage, des ostéocytes, des cellules endothéliales, des cellules musculaires, des cellules neurales, des cellules rétiniennes, des cellules pancréatiques, des cellules sanguines, ou des cellules souches ou progénitrices capables de se différencier en ces cellules.

Ces cellules peuvent notamment être organisées en tissu, de préférence sélectionné dans le groupe constitué de la peau, la cornée, un tendon, un tissu osseux, un vaisseau sanguin, un nerf, une valve cardiaque, une membrane amniotique, un tissu cartilagineux, un îlot de Langerhans et un tissu musculaire, ou organisées en organe complet ou partiel, de préférence sélectionné dans le groupe constitué du rein, foie, cœur, cordon ombilical, placenta, intestin, poumon et pancréas.

De préférence, les cellules conservées sont des cellules souches hématopoïétiques, des cellules souches mésenchymateuses, ou une combinaison de celles-ci, de préférence des cellules souches hématopoïétiques.

La présente demande décrit également une trousse comprenant un milieu de conservation cellulaire, un premier conteneur stérile destiné à recevoir des cellules, tissus ou organes et le milieu de conservation cellulaire, et un dispositif permettant de créer une atmosphère hypoxique et/ou hypercapnique dans le premier conteneur comprenant les cellules, tissus ou organes, et optionnellement un second conteneur permettant d'assurer le maintien du premier conteneur et/ou des cellules, tissus ou organes à une température contrôlée.

Alternativement, la trousse peut comprendre un conteneur stérile destiné à recevoir des cellules, tissus ou organes et le milieu de conservation cellulaire renfermant une atmosphère hypoxique et/ou hypercapnique, ledit conteneur stérile étant optionnellement pré-rempli avec du milieu de conservation cellulaire.

Selon un autre aspect, la présente invention concerne également l'utilisation d'une trousse telle que décrite pour mettre en œuvre le procédé selon l'invention, c'est-à-dire pour conserver des cellules animales en hypothermie sévère.

### BREVE DESCRIPTION DES DESSINS

**Figure 1** : Cellules CD34+ de sang placentaire. Rendement des cellules viables par rapport à t=0. Air : 21% O₂, et 0.01% CO₂ ; HH : 9% CO₂ et 5% O₂; Hypo : 5% O₂ et 0.001 CO₂; Hyper : 20% O₂ et 20% CO₂. * : p < 0,5 ; ** : p < 0,01 ; *** : p < 0,001.
**Figure 2** : Cellules CD34+ de sang placentaire. Rendement des progéniteurs clonogéniques par rapport à t=0. Air : 21% O₂, et 0.01% CO₂ ; HH : 9% CO₂ et 5% O₂; Hypo : 5% O₂ et 0.001 CO₂; Hyper : 20% O₂ et 20% CO₂. * : p < 0,5 ; ** : p < 0,01 ; *** : p < 0,001.
**Figure 3** **:** Cellules mésenchymateuses humaines. Rendement des cellules viables par rapport à t=0. Air : 21% O₂, et 0.01% CO₂ ; HH : 9% CO₂ et 5% O₂; Hypo : 5% O₂ et 0.001 CO₂; Hyper : 20% O₂ et 20% CO₂. * : p < 0,5 ; ** : p < 0,01 ; *** : p < 0,001.
**Figure 4** : Cellules mésenchymateuses humaines. Rendement des progéniteurs clonogéniques par rapport à t=0. Air : 21% O₂, et 0.01% CO₂ ; HH : 9% CO₂ et 5% O₂; Hypo : 5% O₂ et 0.001 CO₂ ; Hyper : 20% O₂ et 20% CO₂. * : p < 0,5 ; ** : p < 0,01 ; *** : p < 0,001.
**Figure 5** **:** Cellules FDCPmix. Rendement des cellules viables par rapport à t=0. Air : 21% O₂, et 0.01% CO₂; HH : 9% CO₂ et 5% O₂; Hypo : 5% O₂ et 0.001 CO₂ ; Hyper : 20% O₂ et 20% CO₂. * : p < 0,5 ; ** : p < 0,01 ; *** : p < 0,001.

### DESCRIPTION DETAILLEE DE L'INVENTION

Dans de précédentes études, les inventeurs de la présente invention ont observé que l'hypoxie et l'hypercapnie permettaient d'améliorer la conservation des cellules souches hématopoïétiques par rapport à leur exposition à l'air (Jeanne et al., 2009 ; Ivanovic et al., 2010 ; Vlaski et al., 2014).

Dans la partie expérimentale de la présente demande, les inventeurs ont démontré que la pré-incubation de cellules souches durant deux jours en hypothermie modérée (30°C) avant de les transférer à 4°C, améliorait de manière très significative la survie de ces cellules et la capacité fonctionnelle des progéniteurs par rapport à un placement direct à 4°C. Les résultats obtenus sont d'autant plus marqués lorsque la pré-incubation est combinée à une atmosphère hypoxique et/ou hypercapnique. Ces résultats, validés sur trois types cellulaires différents, à savoir des cellules hématopoïétiques CD34+, des cellules mésenchymateuses et des cellules de la lignée FDCPmix, indiquent que ce procédé peut être utilisé pour améliorer la conservation des cellules, tissus ou organes en hypothermie, notamment en vue d'une transplantation.

Ainsi, selon un premier aspect, la présente demande concerne un procédé *in vitro* ou *ex vivo* de conservation de cellules animales en hypothermie sévère comprenant une étape consistant à maintenir lesdites cellules en hypothermie modérée durant une brève période, avant de les conserver en hypothermie sévère.

Le procédé selon l'invention a pour but d'améliorer la préservation des cellules animales lorsque celles-ci sont conservées en hypothermie sévère, sans congélation. Tel qu'utilisé ici, le terme « hypothermie sévère » se réfère à des températures supérieures à 0 °C et inférieures à 15°C. De manière préférée, ce terme se réfère à des températures comprises entre environ 1°C et environ 12°C, à savoir environ 1, 2, 3, 4, 5, 6, 7, 8, 9, 10, 11 ou 12°C, de préférence entre environ 1°C et environ 8°C, et en particulier entre environ 2°C et environ 8°C. De manière plus particulièrement préférée, des conditions d'hypothermie sévère correspondent à une température comprise entre environ 1°C et environ 6°C, de préférence d'environ 4°C.

Tel qu'utilisé ici, le terme « environ » fait référence à une plage de valeurs de ± 5% de la valeur spécifiée, de préférence ± 2% de la valeur spécifiée. Par exemple, «environ 20» inclut les ± 5% de 20, ou de 19 à 21. Il est entendu que les valeurs précédées du terme « environ » doivent également être considérées comme spécifiquement décrites dans la présente demande. Par exemple, l'expression « une température comprise entre environ 1°C et environ 12°C » doit également être considérée comme décrivant « une température comprise entre 1°C et 12°C ». De la même manière, l'expression «une température d'environ 4°C » doit également être considérée comme décrivant « une température de 4°C ».

Avant d'être placées en hypothermie sévère, les cellules sont maintenues en hypothermie modérée durant une brève période. Tel qu'utilisé ici, le terme « hypothermie modérée » se réfère à des températures comprises entre environ 20°C et environ 35°C, à savoir environ 20, 21, 22, 23, 24, 25, 26, 27, 28, 29, 30, 31, 32, 33, 34 ou 35°C, de préférence entre environ 25°C et environ 32°C, de manière encore préférée entre environ 27°C et environ 32°C. De manière plus particulièrement préférée, une hypothermie modérée correspond à une température d'environ 30°C.

Dans le procédé selon l'invention, les cellules sont placées en hypothermie modérée durant environ 12 heures à environ 72 heures, de préférence durant environ 24 heures à environ 60 heures ou durant environ 36 heures à environ 60 heures, avant d'être placées en hypothermie sévère en vue d'une conservation à plus long terme. De préférence, la phase d'hypothermie modérée dure d'environ 24 heures à environ 48 heures, et de manière tout particulièrement préférée, environ 48 heures.

Selon un mode de réalisation préféré, les cellules sont placées en hypothermie sévère immédiatement après l'étape en hypothermie modérée.

Dans le procédé selon l'invention, les cellules peuvent être conservées en hypothermie sévère durant une longue période, par exemple de plusieurs jours à plusieurs mois, avant d'être utilisées. En particulier, les cellules peuvent être conservées en hypothermie sévère durant plus de 24 heures, en particulier de 1 jour à 120 jours, de préférence durant 1 jour à 1 mois, de manière encore préférée durant 1 jour à 15 jours, et de manière plus particulièrement préférée durant 5 jours à 10 jours.

Les cellules conservées par le procédé selon l'invention sont de préférence des cellules qui ont été prélevées sur un animal ou donneur, de préférence un mammifère, et de manière particulièrement préférée un humain. En particulier, ces cellules peuvent être destinées à être administrées ultérieurement à un receveur dans le cadre d'une transplantation.

Selon un mode de réalisation préféré, les cellules ne sont ni congelées ni soumises à des conditions d'hypothermie sévère avec d'être placées en hypothermie modérée. Les cellules sont de préférence placées en hypothermie modérée dans un délai d'au maximum 4 heures après leur prélèvement sur le donneur. De manière tout particulièrement préférée, les cellules sont placées en hypothermie modérée immédiatement après leur prélèvement, c'est-à-dire dans l'heure suivant le prélèvement.

Avant conservation, les cellules peuvent être soumises à différentes analyses telles que la sérologie, le typage HLA, et des examens phénotypiques, morphologiques (notamment dans le cas de cellules organisées en tissus ou organes) ou bactériologiques.

Comme démontré dans la partie expérimentale, l'étape préalable en hypothermie modérée suffit à améliorer la conservation des cellules. Cependant, selon certains modes préférés, cette étape est combinée à un ajustement des conditions atmosphériques de la culture afin de constituer une atmosphère hypoxique, hypercapnique ou hypoxique/hypercapnique, de préférence une atmosphère hypoxique/hypercapnique.

Une atmosphère hypoxique est une atmosphère comprenant une concentration réduite en dioxygène par rapport à la concentration dans l'air qui est habituellement de 20 à 21%. Tel qu'utilisé ici, le terme d'« atmosphère hypoxique » se réfère à une atmosphère comprenant moins de 10% d'O₂. Ainsi, une atmosphère hypoxique peut comprendre par exemple entre environ 0,5 et environ 10% d'O₂, c'est-à-dire environ 0,5, 1, 2, 3, 4, 5, 6, 7, 8, 9 ou 10%. Selon certains modes de réalisation préférés, une atmosphère hypoxique comprend entre environ 1% et environ 5% d'O₂. De manière tout particulièrement préférée, l'atmosphère hypoxique comprend environ 5% d'O₂. Dans une atmosphère hypoxique, la concentration en dioxyde de carbone correspond de préférence à celle de l'air ambiant, à savoir environ 0,05%. Le complément du mélange gazeux est en général composé de dioxyde d'azote.

Une atmosphère hypercapnique est une atmosphère comprenant une concentration en dioxyde de carbone augmentée par rapport à la concentration dans l'air qui est habituellement inférieure à 0,05%. Tel qu'utilisé ici, le terme d'« atmosphère hypercapnique » se réfère de préférence à une atmosphère comprenant plus de 5% de CO₂. Ainsi, une atmosphère hypercapnique peut comprendre par exemple entre environ 5 et environ 20% de CO₂, c'est-à-dire environ 5, 6, 7, 8, 9, 10, 11, 12, 13, 14, 15, 16, 17, 18, 19 ou 20%. Selon certains modes de réalisation préférés, une atmosphère hypercapnique comprend entre environ 5% et environ 10% de CO₂, de préférence entre environ 6 ou 7% et environ 10% de CO₂. Selon d'autres modes de réalisation préférés, une atmosphère hypercapnique comprend entre environ 6% et en environ 20% de CO₂, de préférence entre environ 9% et environ 20% de CO₂. De manière tout particulièrement préférée, l'atmosphère hypercapnique comprend environ 9% de CO₂. Dans une atmosphère hypercapnique, la concentration en dioxygène correspond de préférence à celle de l'air ambiant, à savoir environ 20-21%. Le complément du mélange gazeux est en général composé de dioxyde d'azote.

Une atmosphère hypoxique/hypercapnique est une atmosphère comprenant une concentration réduite en dioxygène et une concentration augmentée en dioxyde de carbone par rapport aux concentrations habituelles dans l'air ambiant. De manière plus spécifique, tel qu'utilisé ici, le terme d'« atmosphère hypoxique/hypercapnique » se réfère à une atmosphère comprenant moins de 10% d'O₂ et plus de 5% de CO₂. Les gammes de valeurs préférées en O₂ et CO₂ sont telles que définies ci-dessus pour les conditions hypoxique et hypercapnique. De manière particulièrement préférée, l'atmosphère hypoxique/hypercapnique comprend environ 5% d'O₂ et environ 9% de CO₂. Le complément du mélange gazeux est en général composé de dioxyde d'azote.

Chacun de ces mélanges gazeux particuliers peut être obtenu par des procédés bien connus de l'homme du métier, notamment au moyen de chambres d'incubation à atmosphère contrôlée disponibles auprès de nombreux fournisseurs.

Les cellules conservées par le procédé selon l'invention peuvent être toute cellule animale pour laquelle une conservation en hypothermie sévère est souhaitée.

De préférence, les cellules sont des cellules de mammifère, et de manière tout particulièrement préférée, des cellules humaines.

Selon un mode de réalisation préférée, les cellules sont des cellules destinées à être transplantées chez un receveur et sont de préférence issues d'un prélèvement chez un donneur. Le donneur et le receveur peuvent être le même individu (greffe autologue) ou des individus différents (greffe allogénique).

Les cellules peuvent être des cellules isolées ou des cellules organisées en tissus ou organes.

Selon un mode de réalisation, les cellules conservées sont des cellules isolées. Ces cellules peuvent être sélectionnées par exemple dans le groupe constitué des cellules de peau, de cartilage, des ostéocytes, des cellules endothéliales, des cellules musculaires, des cellules neurales, des cellules rétiniennes, des cellules pancréatiques, des cellules sanguines, ou des cellules souches ou cellules progénitrices capables de se différencier en ces cellules.

Les cellules souches peuvent être des cellules souches pluripotentes (capables de se différencier en tous les types cellulaires d'un organisme), multipotentes (capables de se différencier en types cellulaires de différents tissus) ou unipotentes (capables de se différencier en types cellulaires d'un seul tissu). Les cellules progénitrices sont des cellules capables de se différencier en différents types cellulaires d'un seul tissu. Elles peuvent être oligopotentes (capables de se différencier en un petit nombre de types cellulaires, par exemples les cellules progénitrices CFU-GEMM), bipotentes (capables de se différencier en deux types cellulaires, par exemple les cellules progénitrices CFU-GM) ou unipotentes (capables de se différencier en un seul type cellulaire, par exemple les cellules progénitrices CFU-G, CFU-M, CFU-MK, BFU-E et CFU-E). A la différence des cellules progénitrices, les cellules souches possèdent une réelle capacité d'auto-renouvellement et présente une capacité de prolifération largement supérieure.

Dans un mode de réalisation, les cellules souches sont des cellules souches pluripotentes choisies parmi les cellules souches embryonnaires, les cellules progénitrices multipotentes adultes (ou MAPC) ou les cellules souches pluripotentes induites.

Les cellules souches embryonnaires sont dérivées de la masse cellulaire interne du blastocyste et ont la capacité de conduire à la formation de tous les tissus de l'organisme (mésoderme, endoderme, ectoderme), y compris aux cellules de la lignée germinale. La pluripotente des cellules souches embryonnaires peut être évaluée par la présence de marqueurs tels que les facteurs de transcription OCT4 et NANOG et les marqueurs de surface comme SSEA3/4, Tra-1-60 et Tra-1-81. Les cellules souches embryonnaires peuvent être obtenues sans destruction de l'embryon dont elles sont issues par exemple à l'aide de la technique décrite par Chung et al. (2008). Dans un mode de réalisation particulier, et pour des raisons légales ou éthiques, les cellules souches embryonnaires sont des cellules souches embryonnaires non humaines. De manière générale, selon un mode de réalisation particulier, les cellules conservées selon le procédé de l'invention ne sont pas des cellules souches embryonnaires humaines.

Les cellules progénitrices multipotentes adultes peuvent, comme les cellules souches embryonnaires se différencier en cellules issues de n'importe lequel des trois feuillets embryonnaires et expriment les facteurs de transcription OCT4 et NANOG. Ces cellules peuvent être isolées à partir de différents organes, notamment à partir de la moelle osseuse (Schwartz et al., 2002).

Les cellules souches pluripotentes induites sont des cellules pluripotentes obtenues par reprogrammation génétique de cellules somatiques différenciées. Outre leur morphologie et leur potentiel d'autorenouvellement et de pluripotence similaires à ceux des cellules souches embryonnaires, les CSPi présentent également une reprogrammation épigénétique avec un profil global de méthylation des histones et d'expression des gènes très proche de celui des cellules souches embryonnaires. Ces cellules sont notamment positives pour les marqueurs de pluripotence, notamment la coloration à la phosphatase alcaline et l'expression des protéines NANOG, SOX2, OCT4 et SSEA3/4. Les procédés permettant l'obtention des cellules souches pluripotentes induites sont bien connus de l'homme du métier et sont notamment décrits dans les articles de Yu, et al. (2007), Takahashi et al. (2007) et Nakagawa et al., (2008).

Dans un autre mode de réalisation, les cellules souches sont des cellules souches multipotentes. Des exemples non limitatifs de cellules souches multipotentes incluent les cellules souches hématopoïétiques capables de se différencier en cellules sanguines et immunes que sont les globules blancs, les globules rouges et les plaquettes, en particulier les cellules souches hématopoïétiques exprimant l'antigène CD34, ou les cellules souches mésenchymateuses capables de se différencier en cellules cartilagineuses (chondrocytes), cellules osseuses (ostéoblastes) et cellules graisseuses (adipocytes). Les cellules souches hématopoïétiques CD34+ et les cellules souches mésenchymateuses peuvent être isolées à partir de la moelle osseuse à l'aide de toute technique connue de l'homme du métier, par exemple à l'aide d'un système immuno-magnétique ou un système de filtration.

Dans un autre mode de réalisation, les cellules souches sont des cellules souches unipotentes. Des exemples non limitatifs de cellules souches unipotentes incluent des cellules souches de la peau, du foie et de la muqueuse intestinale.

Selon un mode de réalisation préférée, les cellules conservées sont ou contiennent des cellules souches, de préférence des cellules souches hématopoïétiques ou mésenchymateuses, ou une combinaison de celles-ci. De manière tout particulièrement préférée, les cellules conservées sont des cellules souches hématopoïétiques.

Dans certains modes de réalisation, les cellules conservées peuvent être organisées en tissus ou organes.

Des exemples non limitatifs de tissus pouvant être conservés selon le procédé de l'invention incluent la peau, la cornée, un tendon, un tissu osseux, un vaisseau sanguin, un nerf, une valve cardiaque, une membrane amniotique, un tissu cartilagineux, un îlot de Langerhans et un tissu musculaire.

Les organes conservés selon le procédé de l'invention peuvent être complets, par exemple un rein ou un foie complet, ou partiels, par exemple un foie partiel. Des exemples non limitatifs d'organes pouvant être conservés selon le procédé de l'invention incluent un rein, foie, cœur, cordon ombilical, placenta, intestin, poumon et pancréas.

Dans le procédé selon l'invention, les cellules, tissus ou organes peuvent être conservés dans tout milieu adapté, de préférence un milieu liquide. Il existe une multitude de milieux adaptés à la conservation des cellules, tissus ou organes. L'homme du métier peut aisément choisir un milieu adapté en fonction du type de cellules, tissus ou organes à conserver. De tels milieux sont décrits par exemple dans les demandes internationales de brevet WO 2014/057220, WO 2014/120014, WO 2012/129538, WO 2011/159359, WO 06/052133, WO 97/33978 et WO 00/02572. De nombreux fournisseurs commercialisent également des milieux adaptés, tels que par exemple les milieux HP01 et HP02 de Macopharma, les milieux Stem alpha A et Stem alpha S3 de Stemcell ou le milieu Viaspan (ou « University of Wisconsin solution »).

Le milieu permet de préférence une survie des cellules sans pour autant stimuler leur prolifération.

L'un des avantages du procédé selon l'invention est que celui-ci ne requiert pas l'utilisation de cryoprotecteurs dans le milieu de conservation. Celui-ci peut être directement injectable, notamment dans le cas d'une greffe de cellules souches hématopoïétiques, ou nécessiter un lavage du greffon avant administration.

Dans le cas d'organes ou de tissus, ceux-ci peuvent être immergés dans un volume adapté de façon à être totalement recouverts.

Avant utilisation des cellules, notamment dans le cadre d'une transplantation, différents tests peuvent être menés afin de vérifier la qualité du greffon, par exemple la mesure de l'apoptose ou un test clonogénique des progéniteurs CFU-GM (Colony Forming Unit - Granulocyte Macrophage) ou CFC-GM (Colony Forming Cells - Granulocyte Macrophage) réalisé dans le cadre du contrôle de la qualité des greffons hémotopoïétiques.

La présente demande décrit également une trousse.

Selon un premier aspect, celle-ci comprend
- un milieu de conservation cellulaire,
- un premier conteneur stérile destiné à recevoir des cellules, tissus ou organes et le milieu de conservation cellulaire, et
- un dispositif permettant de créer une atmosphère hypoxique et/ou hypercapnique dans le premier conteneur comprenant les cellules, tissus ou organes.

Optionnellement, le premier conteneur stérile peut être pré-rempli avec du milieu de conservation cellulaire.

Une atmosphère hypoxique et/ou hypercapnique peut être créée dans le premier conteneur après y avoir placé les cellules, tissus ou organes.

Selon un aspect particulier, ledit conteneur comprend une entrée et une sortie permettant les échanges gazeux et le dispositif permettant de créer une atmosphère hypoxique et/ou hypercapnique est utilisé pour injecter dans ledit conteneur l'atmosphère souhaitée. Ces entrée et sortie sont ensuite fermées pour maintenir les cellules, tissus ou organes dans ladite atmosphère. Le dispositif permettant de créer une atmosphère hypoxique et/ou hypercapnique est de préférence un dispositif sous pression tel qu'une cartouche de gaz.

Selon un autre aspect particulier, le conteneur stérile comprenant les cellules, tissus ou organes peut être placé dans une chambre d'incubation à atmosphère contrôlée permettant de créer une atmosphère hypoxique et/ou hypercapnique.

Selon un second aspect, la trousse peut comprendre un conteneur stérile destiné à recevoir des cellules, tissus ou organes et le milieu de conservation cellulaire renfermant une atmosphère hypoxique et/ou hypercapnique. Optionnellement, ce conteneur stérile peut être pré-rempli avec du milieu de conservation cellulaire.

La trousse telle que décrite ici peut comprendre en outre un second conteneur permettant d'assurer le maintien du premier conteneur et/ou des cellules, tissus ou organes à une température contrôlée.

Ce second conteneur permet de maintenir les cellules, tissus ou organes en hypothermie modérée, de préférence immédiatement après le prélèvement. Ce même conteneur peut ensuite être utilisé pour placer les cellules, tissus ou organes en hypothermie sévère. Alternativement, les cellules, tissus ou organes peuvent être changés de conteneur lorsqu'ils sont placés en hypothermie sévère.

Le milieu de conservation cellulaire peut être tout milieu de conservation tel que décrit ci-dessous et adapté aux cellules, tissus ou organes à conserver.

La trousse telle que décrite ici est particulièrement adaptée au transport et à la préservation des cellules, tissus ou organes du donneur au receveur dans le cadre d'une transplantation.

Optionnellement, la trousse peut également comprendre d'autres récipients tels qu'un récipient destiné à recevoir l'échantillon sanguin du donneur afin de déterminer le groupe sanguin, ou un récipient destiné à recevoir un échantillon de rate ou de ganglions pour les typages HLA.

La présente invention concerne également l'utilisation d'une trousse telle que décrite ci-dessus pour la mise en œuvre du procédé selon l'invention.

### EXEMPLES

### Exemple 1 : Cellules CD34+ de sang placentaire

### Matériels et méthodes

Après leur isolement par système immuno-magnétique, les cellules CD34+ ont été incubées pendant une nuit dans une culture à 37°C en milieu HP01 (Macopharma) en présence de Stem Cell Factor SCF (100 ng/ml), thrombopoïétine (20 ng/ml) et IL 3 (1 ng/ml) à une concentration de environ 10⁵ cellules par mL. Ce milieu assure une survie des cellules CD34+ sans stimuler leur prolifération. Cette culture a été partagée en 8 flacons non perméables au gaz (2 par condition atmosphérique : i) air (21%O2, - 0.01% CO2), ii) hypoxie/hypercapnie - HH- (9% CO2, 5% O2), iii) hypoxie (5% O2, 0.001 CO2), iv) hypercapnie (20%O2 et 20% CO2)). Tous les flacons sont placés 1 nuit (environ 16h) à 37°C puis 1h en atmosphère modifiée suivant les conditions précédentes à 37°C. Un flacon par condition est mis directement à +4°C pendant 13 jours et l'autre à 30°C pendant 2 jours, puis à +4°C pendant 11 jours (13 jours au total). A la fin de cette période, les cellules ont été réchauffées à 37°C pendant 2h et évaluées en termes de viabilité/apoptose par analyse de l'expression de l'annexine V et de la fixation d'iodure de propidium, ainsi que par le test fonctionnel de capacité de formation de colonies en culture semi-solide (Duchez et al., 2013).

### Résultats

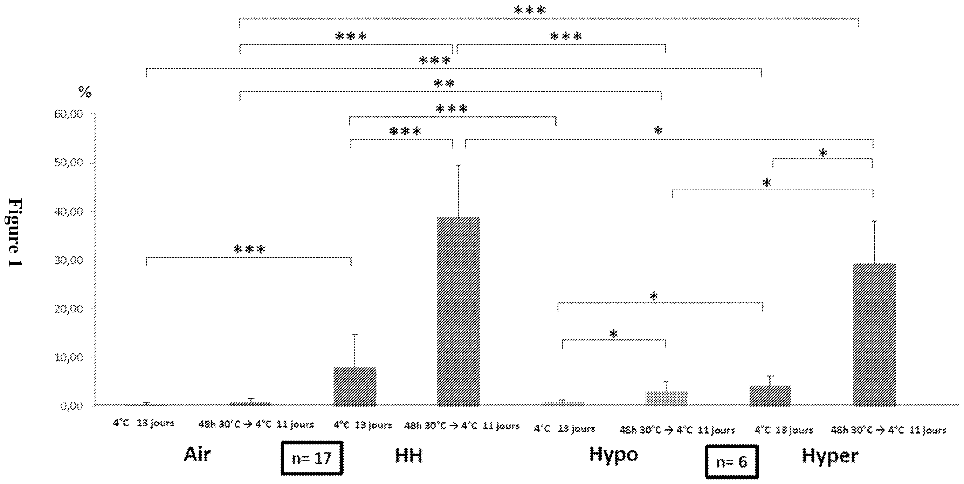

La figure 1 montre le rendement des cellules viables et non-atteintes par l'apoptose. Les résultats présentés sur cette figure démontrent que le placement direct en hypothermie sévère à +4°C et la conservation des cellules pendant 13 jours dans l'air mène à une perte de la totalité des cellules viables.

Si en revanche les suspensions ont été transférées directement à +4°C en atmosphère d'hypoxie/hypercapnie après 13 jours, environ 10% des cellules ont survécu. Cet effet positif d'hypoxie/hypercapnie est multiplié par 4 si les cellules sont pré-incubées pendant 2 jours en hypothermie modérée (30°C).

L'hypoxie seule associée à une pré-incubation à 30°C améliore la survie cellulaire de façon modérée alors qu'elle n'a pas un effet positif sans cette pré-incubation.

L'hypercapnie seule se montre bénéfique avec ou sans pré-incubation, mais l'effet avec pré-incubation en hypothermie modérée est 6 fois supérieur.

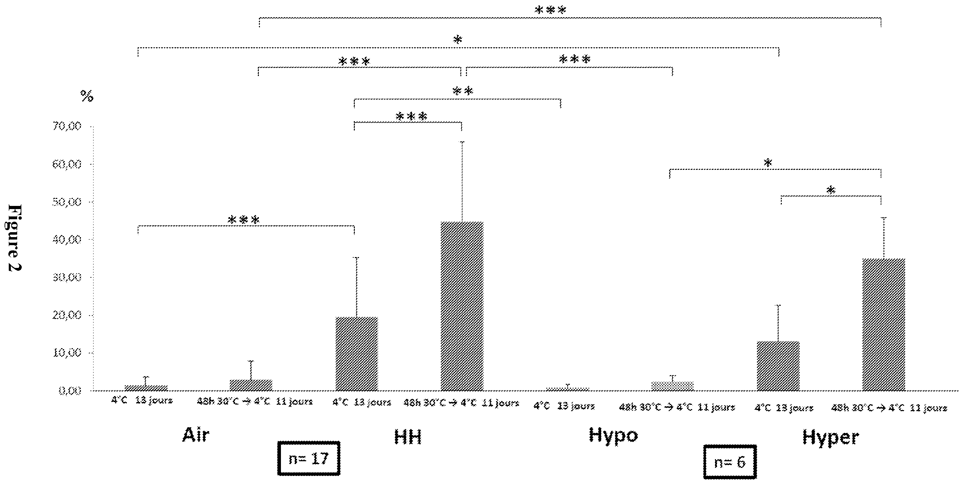

Des résultats tout à fait similaires ont été obtenus pour les progéniteurs clonogéniques dans les conditions étudiées (figure 2). Ces données montrent donc clairement que l'association de l'hypercapnie et de l'hypoxie avec une pré-incubation en hypothermie modérée améliore de façon spectaculaire la survie des cellules CD34+ ainsi que des progéniteurs clonogéniques du sang placentaire. La période observée (13 jours) est extrêmement longue et le niveau de survie des cellules et des progéniteurs (40 à 65%) dépasse toute attente.

### Exemple 2 : Cellules mésenchymateuses

### Matériels et méthodes

Dans cet exemple, et dans un souci de clarté, seules les cellules mésenchymateuses (CM) capables de former des colonies de cellules fibroblastoïdes adhérentes (CFU-F) ont été considérées.

Les cellules mésenchymateuses produites à partir de la moelle osseuse humaine (cellules retenues sur les filtres utilisés pour la filtration de moelle osseuse avant la greffe) préalablement congelées ont été décongelées et mises en culture (α MEM, 10% SVF, β FGF (1ng/ml), L-glutamine (2mM), 0,5% Penicilline-Streptomycine) à 37°C et 5% CO₂ dans 9 flacons et amplifiées jusqu'à confluence. Les flacons sont ensuite aérées à 37°C de la façon suivante : i) air (21% O2, - 0.01% CO2), ii) hypoxie/hypercapnie - HH- (9% CO2, 5% O2), iii) hypoxie (5% O2, 0.001 CO2), iv) hypercapnie (20% O2 et 20% CO2) (deux flacons par condition ; le 9^{ème} flacon étant utilisé pour l'analyse de viabilité/apoptose et pour le test clonogénique avant conservation en hypothermie). Pour chaque condition, le premier flacon a été mis directement à +4°C et conservé pendant 5 jours à 4°C et le deuxième a été maintenu pendant 48 heures à 30°C puis pendant 3 jours à 4°C. Après 5 jours, les cellules ont été réchauffées pendant 2 heures à 37°C et analysées (viabilité/apoptose et capacité clonogénique par les cultures CFU-F, cf. exemple 1).

### Résultats

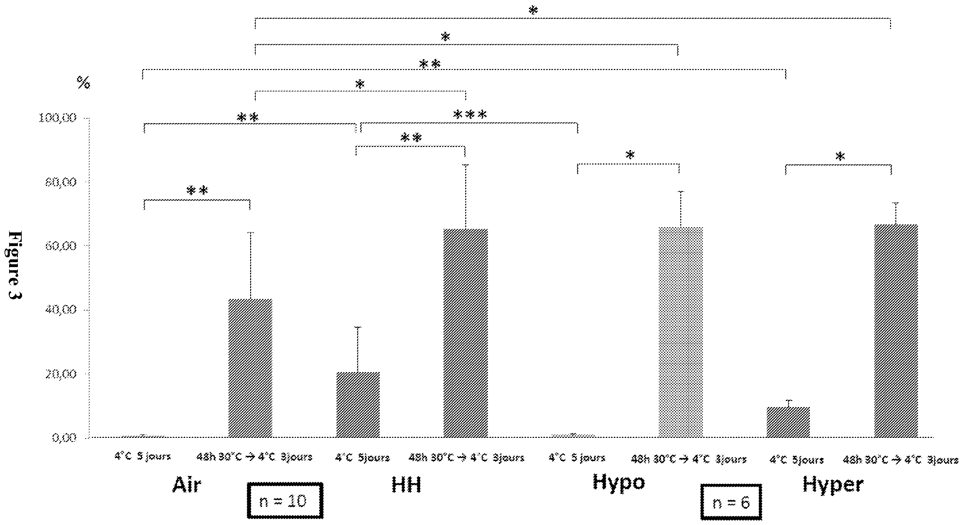

Comme montré dans la figure 3, une période de 48h en hypothermie modérée améliore drastiquement la survie des cellules mésenchymateuses, même à l'air où la totalité des cellules est morte si elles sont incubées à +4°C pendant 5 jours.

L'hypoxie/hypercapnie améliore la survie des CM mises directement à + 4°C et cet effet est multiplié par 3 par un passage à 30°C.

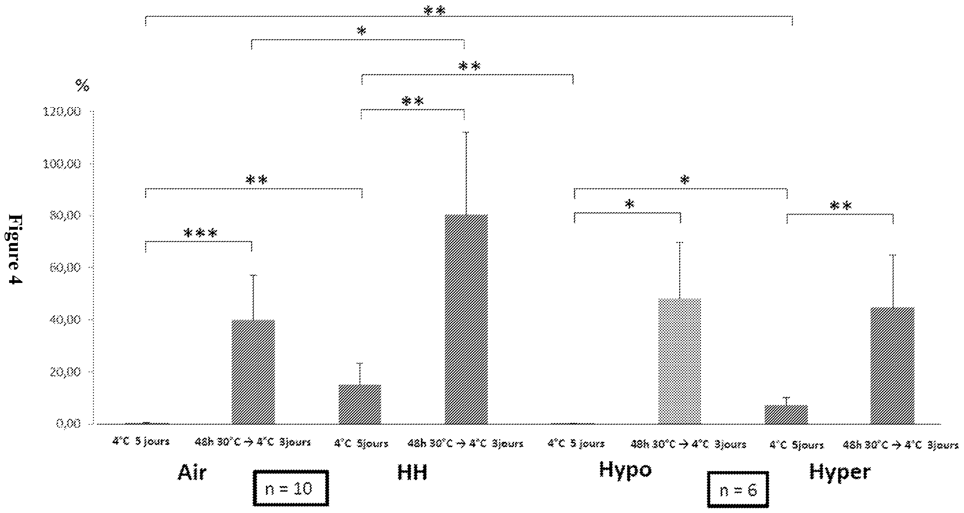

Avec un passage en hypothermie modérée, l'hypoxie et l'hypercapnie chacune séparément assurent un maintien maximal des CM (aux alentours de 70%). Des résultats tout à fait similaires sont obtenus pour CSM (CFU-F) (figure 4).

### Exemple 3 : Cellules de lignée FDCPmix

### Matériels et méthodes

Les cellules FDCPmix sont amplifiées à 37°C et 5% de CO₂ en milieu RPMI supplémenté par 20% de sérum de cheval et 8% de milieu conditionné WEHI - source d'interleukine 3. Les cellules sont ensuite partagées dans deux flacons par condition dans les conditions suivantes : i) air (21% O2, - 0.01% CO2), ii) hypoxie/hypercapnie - HH-(9% CO2, 5% O2), iii) hypoxie (5% O2, 0.001 CO2), iv) hypercapnie (20% O2 et 20% CO2). Le protocole suivi est le même que pour les cellules mésenchymateuses dans l'exemple 2.

### Résultats

Le maintien des cellules FDCPmix est médiocre dans l'air et en hypoxie/hypercapnie sans passage en hypothermie modérée (directement à +4°C).

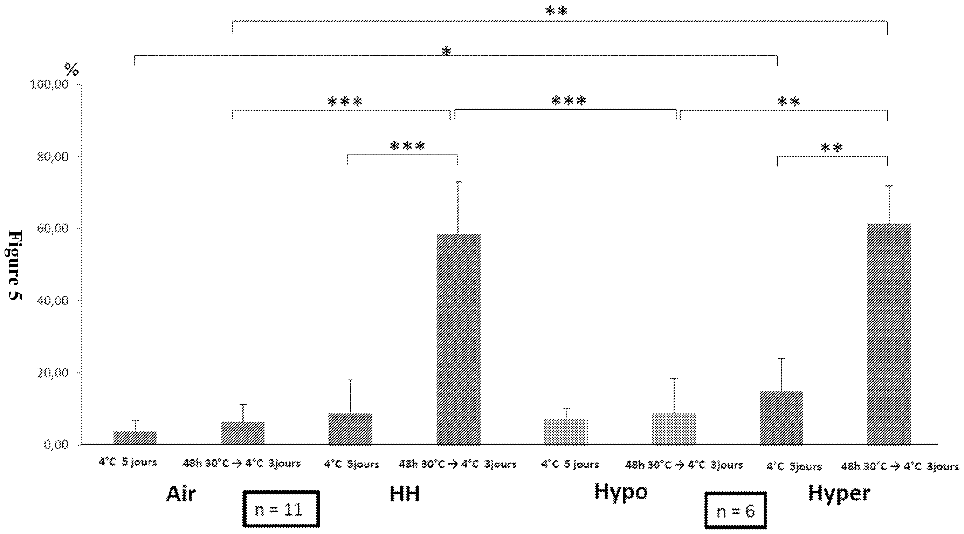

En revanche, la combinaison hypoxie/hypercapnie ou hypercapnie seule avec passage en hypothermie modérée donne un très bon maintien avec environ 60% des cellules FDCPmix (figure 5).

### REFERENCES BIBLIOGRAPHIQUES

Chung et al. Cell Stem Cell. 2008 Feb 7 ; 2(2) : 113-7
Duchez et al. Transfusion. 2013 Sep;53(9):2012-9.
Hechler et al. Ann Hematol, 1996 ; 72 :303-6
Ivanovic et al. Transfusion. 2010 Jan;50(1):120-7.
Jeanne et al. Transfusion. 2009 Aug;49(8): 1738-46
Nakagawa et al. Nat Biotechnol. 2008 Jan;26(1):101-6.
Schwartz et al. J Clin Invest. 2002 May;109(10): 1291-302.
Takahashi, et al. 2007. Cell 131 (5): 861-872
Vlaski et al. J Cell Physiol. 2014, 229 :2153-2165
Yu et al., 2007. Science 318 (5858): 1917-1920

## Revendications

1. Procédé *in vitro* ou *ex vivo* de conservation de cellules animales, de préférence de cellules humaines, en hypothermie sévère comprenant une étape consistant à maintenir lesdites cellules en hypothermie modérée à une température comprise entre 20°C et 35°C et sous une atmosphère hypoxique comprenant 0,5 % à 10 % de dioxygène, et/ou une atmosphère hypercapnique comprenant 5 % à 20 % de dioxyde de carbone, durant 12 à 72 heures, avant de les conserver en hypothermie sévère à une température supérieure à 0°C et inférieure à 15°C.

2. Procédé selon la revendication 1, dans lequel les cellules sont conservées en hypothermie sévère à une température comprise entre 1°C et 12°C, de préférence 4°C.

3. Procédé selon l'une quelconque des revendications précédentes, dans lequel les cellules sont maintenues en hypothermie modérée à une température comprise entre 25°C et 32°C

4. Procédé selon l'une quelconque des revendications précédentes, dans lequel les cellules sont maintenues en hypothermie modérée à une température comprise entre 27°C et 32°C.

5. Procédé selon l'une quelconque des revendications précédentes, dans lequel les cellules sont maintenues en hypothermie modérée et sous une atmosphère hypoxique et/ou hypercapnique durant 24 à 60 heures, de préférence durant 36 à 60 heures.

6. Procédé selon l'une quelconque des revendications précédentes, dans lequel les cellules sont conservées en hypothermie sévère durant plus de 24 heures.

7. Procédé selon l'une quelconque des revendications précédentes, dans lequel les cellules sont conservées en hypothermie sévère durant 1 à 15 jours.

8. Procédé selon l'une quelconque des revendications précédentes, dans lequel l'atmosphère hypoxique comprend entre 1 et 5 % de dioxygène.

9. Procédé selon l'une quelconque des revendications précédentes, dans lequel l'atmosphère hypercapnique comprend entre 9 et 20 % de dioxyde de carbone.

10. Procédé selon l'une quelconque des revendications précédentes, dans lequel les cellules sont maintenues en hypothermie modérée et sous une atmosphère hypoxique et hypercapnique.

11. Procédé selon l'une quelconque des revendications précédentes, dans lequel les cellules sont des cellules de peau, de cartilage, des ostéocytes, des cellules endothéliales, des cellules musculaires, des cellules neurales, des cellules rétiniennes, des cellules pancréatiques, des cellules sanguines, ou des cellules souches ou progénitrices capables de se différencier en ces cellules.

12. Procédé selon l'une quelconque des revendications précédentes, dans lequel les cellules sont organisées en tissu, de préférence sélectionné dans le groupe constitué de la peau, la cornée, un tendon, un tissu osseux, un vaisseau sanguin, un nerf, une valve cardiaque, une membrane amniotique, un tissu cartilagineux, un îlot de Langerhans et un tissu musculaire, ou organisées en organe complet ou partiel, de préférence sélectionné dans le groupe constitué du rein, foie, cœur, cordon ombilical, placenta, intestin, poumon et pancréas.

13. Procédé selon l'une quelconque des revendications précédentes, dans lequel les cellules sont des cellules souches hématopoïétiques, des cellules souches mésenchymateuses, ou une combinaison de celles-ci, de préférence des cellules souches hématopoïétiques.

14. Utilisation d'une trousse pour conserver des cellules animales selon le procédé de l'une quelconque des revendications 1 à 13, ladite trousse comprenant un milieu de conservation cellulaire, un premier conteneur stérile destiné à recevoir des cellules, tissus ou organes et le milieu de conservation cellulaire, et un dispositif permettant de créer une atmosphère hypoxique et/ou hypercapnique dans le premier conteneur comprenant les cellules, tissus ou organes, et optionnellement un second conteneur permettant d'assurer le maintien du premier conteneur et/ou des cellules, tissus ou organes à une température contrôlée.

15. Utilisation selon la revendication 14, ladite trousse comprenant un conteneur stérile destiné à recevoir des cellules, tissus ou organes et le milieu de conservation cellulaire renfermant une atmosphère hypoxique et/ou hypercapnique, ledit conteneur stérile étant optionnellement pré-rempli avec du milieu de conservation cellulaire.

## Patentansprüche

1. *Ex vivo* oder *in vitro* Verfahren zur Konservierung tierischer Zellen, vorzugsweise humaner Zellen, unter starker Hypothermie, umfassend einen Schritt bestehend aus Halten besagter Zellen unter mäßiger Hypothermie bei einer Temperatur zwischen 20°C und 35°C und unter einer hypoxischen Atmosphäre, umfassend 0,5% bis 10% Disauerstoff, und/oder einer hyperkapnischen Atmosphäre, umfassend 5% bis 20% Kohlenstoffdioxid, 12 bis 72 Stunden vor ihrer Konservierung unter starker Hypothermie bei einer Temperatur höher 0°C und niedriger 15°C.

2. Verfahren gemäß Anspruch 1, wobei die Zellen unter starker Hypothermie bei einer Temperatur zwischen 1°C und 12°C, vorzugsweise 4°C konserviert werden.

3. Verfahren gemäß einem der vorhergehenden Ansprüche, wobei die Zellen unter mäßiger Hypothermie bei einer Temperatur zwischen 25°C und 32°C gehalten werden.

4. Verfahren gemäß einem der vorhergehenden Ansprüche, wobei die Zellen unter mäßiger Hypothermie bei einer Temperatur zwischen 27°C und 32°C gehalten werden.

5. Verfahren gemäß einem der vorhergehenden Ansprüche, wobei die Zellen unter mäßiger Hypothermie und unter einer hypoxischen und/oder hyperkapnischen Atmosphäre 24 bis 60 Stunden, vorzugsweise 36 bis 60 Stunden gehalten werden.

6. Verfahren gemäß einem der vorhergehenden Ansprüche, wobei die Zellen unter starker Hypothermie mehr als 24 Stunden konserviert werden.

7. Verfahren gemäß einem der vorhergehenden Ansprüche, wobei die Zellen unter starker Hypothermie 1 bis 15 Tage konserviert werden.

8. Verfahren gemäß einem der vorhergehenden Ansprüche, wobei die hypoxische Atmosphäre zwischen 1 und 5% Disauerstoff umfasst.

9. Verfahren gemäß einem der vorhergehenden Ansprüche, wobei die hyperkapnische Atmosphäre zwischen 9 und 20% Kohlenstoffdioxid umfasst.

10. Verfahren gemäß einem der vorhergehenden Ansprüche, wobei die Zellen unter mäßiger Hypothermie und unter einer hypoxischen und hyperkapnischen Atmosphäre gehalten werden.

11. Verfahren gemäß einem der vorhergehenden Ansprüche, wobei die Zellen Hautzellen, Knorpelzellen, Osteozyten, Endothelzellen, Muskelzellen, Nervenzellen, Retinazellen, Pankreaszellen, Blutzellen oder Stammzellen oder Vorläuferzellen sind mit der Fähigkeit, sich in diese Zellen zu differenzieren.

12. Verfahren gemäß einem der vorhergehenden Ansprüche, wobei die Zellen zu Gewebe organisiert sind, vorzugsweise ausgewählt aus der Gruppe, bestehend aus der Haut, der Cornea, einer Sehne, einem Knochengewebe, einem Blutgefäß, einem Nerv, einer Herzklappe, einer Amnionmembran, einem Knorpelgewebe, einer Langerhans Insel und einem Muskelgewebe, oder zu einem vollständigen oder partiellen Organ organisiert sind, vorzugsweise ausgewählt aus der Gruppe, bestehend aus Niere, Leber, Herz, Nabelschnur, Plazenta, Darm, Lunge und Pankreas.

13. Verfahren gemäß einem der vorhergehenden Ansprüche, wobei die Zellen hämatopoetische Stammzellen, mesenchymale Stammzellen oder eine Kombination davon, vorzugsweise hämatopoetische Stammzellen sind.

14. Verwendung eines Kits zur Konservierung tierischer Zellen gemäß dem Verfahren nach einem der Ansprüche 1 bis 13, wobei besagtes Kit ein Zellkonservierungsmedium, einen ersten sterilen Behälter zur Aufnahme der Zellen, Gewebe oder Organe und des Zellkonservierungsmediums und eine Vorrichtung, die die Bildung einer hypoxischen und/oder hyperkapnischen Atmosphäre in dem ersten Behälter erlaubt, der die Zellen, Gewebe oder Organe enthält, und gegebenenfalls einen zweiten Behälter umfasst, der erlaubt sicherzustellen, dass der erste Behälter und/oder die Zellen, Gewebe oder Organe bei einer kontrollierten Temperatur gehalten werden.

15. Verwendung gemäß Anspruch 14, wobei besagtes Kit einen sterilen Behälter zur Aufnahme der Zellen, Gewebe oder Organe und des Zellkonservierungsmediums, enthaltend eine hypoxische und/oder hyperkapnische Atmosphäre, umfasst, wobei besagter steriler Behälter gegebenenfalls mit Zellkonservierungsmittel vorgefüllt ist.

## Claims

1. An *in vitro* or *ex vivo* method for preserving animal cells, preferably human cells, in severe hypothermia, comprising a step of maintaining said cells in moderate hypothermia at a temperature between 20°C and 35°C and under a hypoxic atmosphere comprising 0.5% to 10% dioxygen, and/or hypercapnic atmosphere comprising 5% to 20% carbon dioxide, for 12 to 72 hours, before preserving same in severe hypothermia at a temperature above 0°C and below 15°C.

2. The method according to claim 1, wherein the cells are preserved in severe hypothermia at a temperature between 1°C and 12°C, preferably of 4°C.

3. The method according to any one of the preceding claims, wherein the cells are maintained in moderate hypothermia at a temperature between 25°C and 32°C.

4. The method according to any one of the preceding claims, wherein the cells are maintained in moderate hypothermia at a temperature between 27°C and 32°C.

5. The method according to any one of the preceding claims, wherein the cells are maintained in moderate hypothermia and under a hypoxic and/or hypercapnic atmosphere for 24 to 60 hours, preferably for 36 to 60 hours.

6. The method according to any one of the preceding claims, wherein the cells are preserved in severe hypothermia for more than 24 hours.

7. The method according to any one of the preceding claims, wherein the cells are preserved in severe hypothermia for 1 to 15 days.

8. The method according to any one of the preceding claims, wherein the hypoxic atmosphere comprises between 1 and 5% dioxygen.

9. The method according to any one of the preceding claims, wherein the hypercapnic atmosphere comprises between 9% and 20% carbon dioxide.

10. The method according to any one of the preceding claims, wherein the cells are maintained in moderate hypothermia and under a hypoxic and hypercapnic atmosphere.

11. The method according to any one of the preceding claims, wherein the cells are skin cells, cartilage cells, osteocytes, endothelial cells, muscle cells, neural cells, retinal cells, pancreatic cells, blood cells, or stem or progenitor cells capable of differentiating into these cells.

12. The method according to any one of the preceding claims, wherein the cells are organized into tissue, preferably selected from the group consisting of skin, cornea, tendon, bone tissue, blood vessel, nerve, heart valve, amniotic membrane, cartilage tissue, islet of Langerhans and muscle tissue, or are organized into a complete or partial organ, preferably selected from the group consisting of kidney, liver, heart, umbilical cord, placenta, intestine, lung and pancreas.

13. The method according to any one of the preceding claims, wherein the cells are hematopoietic stem cells, mesenchymal stem cells or a combination thereof, preferably hematopoietic stem cells.

14. Use of a kit for preserving animal cells according to the method of any one of claims 1 to 13, said kit comprising a cell preservation medium, a first sterile container for receiving cells, tissues or organs and the cell preservation medium, and a device for creating a hypoxic and/or hypercapnic atmosphere in the first container comprising the cells, tissues or organs, and optionally a second container for maintaining the first container and/or the cells, tissues or organs at a controlled temperature.

15. Use according to claim 14, said kit comprising a sterile container for receiving cells, tissues or organs and the cell preservation medium, containing a hypoxic and/or hypercapnic atmosphere, said sterile container being optionally prefilled with cell preservation medium.
